# EUROPEAN PATENT SPECIFICATION

(11) **EP 1 473 205 B1**
(45) Date of publication and mention of the grant of the patent: **07.07.2010**
(21) Application number: 04010292.3
(22) Date of filing: 30.04.2004
(51) Int. Cl.: B61B 10/04, B61B 13/12, B65G 35/06, B65G 17/26

(54) **Conveyer system with individual load carriers.**
Fördervorrichtung mit einzelnen Lasträger.
Système de convoyeurs, à porte-charges individuels.

(30) Priority: 01.05.2003 JP 2003126093; 01.05.2003 JP 2003126094; 01.05.2003 JP 2003126095
(43) Date of publication of application: 03.11.2004
(73) Proprietor: DAIFUKU CO., LTD., Osaka-shi, Osaka 555-0012 (JP)
(72) Inventor: Nishihara, Shigeyoshi c/o Daifuku Co., Ltd., Hino-cho Gamo-gun Shiga 529-1692 (JP); Iba, Toshiyuki c/o APS INC., Osaka-shi Osaka 555-0012 (JP)
(74) Representative: Grünecker, Kinkeldey, Stockmair & Schwanhäusser Anwaltssozietät

(56) References cited:
- EP-A- 0 738 673
- EP-A- 1 097 885
- EP-A- 1 232 967
- GB-A- 2 380 175
- PATENT ABSTRACTS OF JAPAN vol. 1995, no. 04, 31 May 1995 (1995-05-31) & JP 07 025441 A (DAIFUKU CO LTD), 27 January 1995 (1995-01-27)

## Description

The present invention relates to a conveyance apparatus according to the preamble of claim 1.

Conventionally, the composition illustrated in Japanese Unexamined Patent Publication No. 7-25441 has been proposed as a conveyance apparatus of this kind. In other words, the main body of a movable body capable of moving along a fixed path by being supported and guided on rails is formed by three frame bodies which are connected in a relatively rotatable fashion by means of connecting devices. The frame bodies each consists of a rectangular shaped body which is elongated in the direction of the fixed path, and the side faces thereof are formed as passive surfaces. The middle frame body is provided with a conveyed item supporting unit and guided devices which are supported and guided by the rails, and the front and rear side frame bodies are each provided with a guided device which is supported and guided by the rails.

In this case, all (four) of the guided devices are formed in a trolley structure including vertical pins installed rotatably on the respective end frame members provided in the frame body, a trolley main body connected rotatably to the lower ends of these vertical pins by means of lateral pins, total four supported rollers installed on both sides of the trolley main body in front and rear pairs, and a total of four guided rollers installed on the upper and lower sides of the trolley main body in front and rear pairs.

Idle wheels are installed on the lower side of the item supporting unit, and a pair of guide rails which support these idle wheels from below are provided along a fixed path. These rails have a channel shape, and are provided as a right and left-hand pair of rails, with open sections of the respective rails mutually facing each other. A guide frame body for guiding an upper guided roller is fixed to the upper edge section of the open section of each rail, and a guide frame body for guiding a lower guided roller is fixed to the lower edge section.

If a conventional structure of this kind is adopted, the movable body is moved along a fixed path by means of the group of supported rollers of the respective guided devices being supported and guided by the rails, and by means of the group of guided rollers being guided by the guide frame body. Moreover, the weight of the item supporting unit is supported by means of the idle wheels being supported and guided by the guide rails.

However, according to the conventional composition described above, the groups of idle wheels are disposed in a fixed state in an uniform posture (orientation) with respect to the item supporting unit. Therefore, in a curved path which turns in the right or leftward direction in a plan view, the central axis linking the right and left-hand idle wheels is orientated in parallel with the radius of the curve. In other words, the group of idle wheels are orientated in a direction that is inclined with respect to the curved path of the guide rails, and therefore, there may arise such cases that the group of idle wheels produce frictional rotation, accompanied by slipping (friction resistance), which causes movement to be hard to be smooth due to the frictional rotation occurring at a plurality of positions. Therefore, the item supporting unit may be supported and guided along the guide rails whilst toppling or catching with respect to the guide rails, and therefore the movement of the movable body along the curved path cannot be performed smoothly. Further, the composition and disposition (configuration) of the guide rails in the curved path differs from that in a linear path, and therefore the installation of the guide rails in the curved path becomes complicated and expensive.

According to the conventional composition described above, since the guided devices are connected by inserting the lower ends of vertical pins bearing weight into the trolley main body, such a composition is obtained that is liable to produce toppling in the coupling sections. Therefore, especially when a large (wide or high) item having an unbalanced load is being conveyed, the inclination of the item supporting unit, in other words, the conveyed item, will increase, and there is a risk that problems will occur in the stability of the conveyance operation. In order to resolve such problems, it is necessary to adopt large and expensive guided devices which have the strength to support large loads. Accordingly, the guided devices become expensive, that is, the overall device becomes expensive.

Moreover, according to the conventional composition described above, the same structure is adopted for all of the guided devices, with the aim of achieving standardization of components. In this case, however, the same composition as of the middle section guided devices is adopted, which is strong enough to bear high loads and is expensive, for the guided devices at the front and rear ends where the load is small, so that the overall device becomes expensive. Moreover, since the front and rear pairs of guided rollers of the guided devices are guided by the guide frame body, the guided devices rotate relatively about the vertical pins with respect to the longitudinal direction of the frame body, in a curved path which turns in the right or leftward direction in plan view. In this case, all of the total of four supported rollers in the guided devices in the end sections, in particular, become orientated in parallel to the tangent to the curve in the region of the vertical pins, in other words, the supported rollers are orientated in a direction that diverges from the direction of movement of the frame body. Accordingly, the group of supported rollers perform frictional rotation, accompanied by slipping (frictional resistance), and hence there may be such cases that the movement cannot be performed smoothly due to the frictional rotation at these four points. Therefore, the guided devices may topple or catch with respect to the guide rails while being guided along the rails, and hence the movement of the movable body along a curved path section may not be performed smoothly.

Additionally, a chain operated floor conveyor is known in EP-A-1097885. The floor conveyor comprises four wheels which are laterally connected with a crossbeam. The crossbeam is rotatably connected with an item supporting unit. The wheels are The following in this way continuously a direction of guide rails.

### SUMMARY OF THE INVENTION

It is an object of the present invention to provide a conveyance apparatus using movable bodies whereby movement of the movable body can be performed smoothly, at all times, even in a curved path.

It is also an object of the present invention to provide a conveyance apparatus using movable bodies, of which entire structure is simple and inexpensive, and which includes the installation of the guide rails and the like, in which the inclination of an item supporting unit can be reduced, while ensuring smooth supporting and guiding of the supporting unit even in a curved path.

In order to achieve the aforementioned object, the conveyance apparatus using movable bodies according to the present invention is characterized by the features of claim 1. Accordingly, the conveyance apparatus using movable bodies is characterized In that the vertical shaft is connected with a lateral roller supporting body, and idle wheels are provided at the right and left-hand ends of the roller supporting body, and the idle wheels are supported and guided by guide bodies disposed at prescribed positions in the fixed path, and the main body of each movable body comprises three or more frame bodies connected In a relatively rotatable fashion via vertical shafts, the main body is connected with guided devices at positions corresponding to the front and rear ends of each frame body.

According to the composition of the present invention described above, when a movable body moves by means of a motive force being imparted to the same, the respective guided devices can be supported and guided by the rail device, via the respective supported rollers, and the weight of the supporting unit (which involves a large load) can be supported stably at all times by means of guided devices having a strong composition wherein supported rollers are provided in a distributed fashion. The movable body can move in a similar manner in a curved path section turning in the leftward or rightward direction, and by means of the guided devices rotating integrally with the vertical shafts, the orientation thereof can change automatically in accordance with the leftward or rightward curve of the rail device. Hence the movable body can be moved smoothly in the curved path section. Moreover, if a curved path section inclined in an upward or downward direction is formed in the fixed path, then by means of the guided devices rotating in a relative fashion about the lateral axles with respect to the vertical shafts, the orientation thereof changes automatically in accordance with the upward or downward curve of the rail device and the movable body is able to move smoothly at all times.

When performing movement of this kind, the roller supporting body connected to the vertical shaft also rotates in integrally with the same, and the central axis of the axle supporting the right and left-hand pair of guide rollers can be orientated towards (made to coincide with) a direction orthogonal to the fixed path, whereby the guide rollers are able to rotate smoothly, without creating slipping (frictional resistance). Therefore, it is possible to support and guide the roller supporting member, without producing any catching, or play, with respect to the guide bodies. Hence the movable body supporting the conveyed item can be moved smoothly and stably, at all times. Moreover, the composition and disposition (configuration) of the guide bodies can be made the same throughout the whole length of the fixed path, and therefore, the guide bodies can be disposed in a simple and inexpensive fashion.

The movable body can also be moved in a similar manner in a curved path section turning to the right or to the left, and in this case, the respective frame bodies are able to move in a state in which they are turned relatively in the rightward or leftward direction, with respect to the vertical shaft. Hence it is possible to ensure smooth movement of the movable body in a curved path section, whilst being able to constitute a long main body, by means of a group of frame bodies. When moving in a curved path section of this kind, when the front and rear pair of guided rollers of the end section guided devices are guided by the rail device, the supported rollers provided at one location between the front and rear guided rollers are orientated in a direction that diverges from the direction of travel of the frame bodies. Therefore, they perform frictional rotation accompanied by slipping (frictional resistance). However, since this frictional rotation occurs at only one position in the front and rear direction, it does not have a very significant effect. Hence the end section guided devices can be supported and guided without producing any catching or play with respect to the rail device, thereby making it possible to achieve smooth movement of the movable body at all times in a curved path section.

### BRIEF DESCRIPTION OF THE DRAWINGS

Fig. 1 is a partially cutaway side view of a principal part of a conveyance apparatus using movable bodies according to a first embodiment of the present invention;
Fig. 2A is a partially cutaway plan view of the principal part of the conveyance apparatus using movable bodies;
Fig. 2B is a plan view in horizontal section of the principal part of the conveyance apparatus using movable bodies;
Fig. 3 is a partially cutaway front view of a principal part of an endless rotary type feed device section in the conveyance apparatus using movable bodies;
Fig. 4 is a partially cutaway side view of the principal part of the endless rotary type feed device section in the conveyance apparatus using movable bodies;
Fig. 5 is another partially cutaway plan view of the principal part of the conveyance apparatus using movable bodies;
Fig. 6 is a partially cutaway front view of a principal part of a frictional type feed device section in the conveyance apparatus using movable bodies;
Fig. 7 is a side view of the principal part of the conveyance apparatus using movable bodies;
Fig. 8 is a partially cutaway front view of the principal part of the frictional type feed device section in the conveyance apparatus using movable bodies;
Fig. 9 is a schematic plan view of a fixed path in the conveyance apparatus using movable bodies;
Fig. 10 is a plan view of a laterally curved path section in the conveyance apparatus using movable bodies;
Fig. 11 is a side view of an ascending/descending path section in the conveyance apparatus using movable bodies;
Fig. 12A is a side view of a principal part of the ascending/descending path section in the conveyance apparatus using movable bodies upon start of entry into this section;
Fig. 12B is a side view of the principal part of the ascending/descending path section at an intermediate stage of the entry;
Fig. 12C is a side view of the principal part of the ascending/descending path section upon ending the entry;
Fig. 13 is a partially cutaway side view of a principal part of a conveyance apparatus using movable bodies according to a second embodiment of the present invention;
Fig. 14A is a partially cutaway plan view of the principal part of the conveyance apparatus using movable bodies;
Fig. 14B is a plan view in horizontal section of the principal part of the conveyance apparatus using movable bodies;
Fig. 15 a partially cutaway front view of a principal part of an endless rotary type feed device section in the conveyance apparatus using movable bodies;
Fig. 16 is a partially cutaway side view of the principal part of the endless rotary type feed device section in the conveyance apparatus using movable bodies;
Fig. 17 is another partially cutaway plan view of the principal part of the conveyance apparatus using movable bodies; and
Fig. 18 is a plan view of a laterally curved path section in the conveyance apparatus using movable bodies.

### DESCRIPTION OF THE PREFERRED EMBODIMENTS

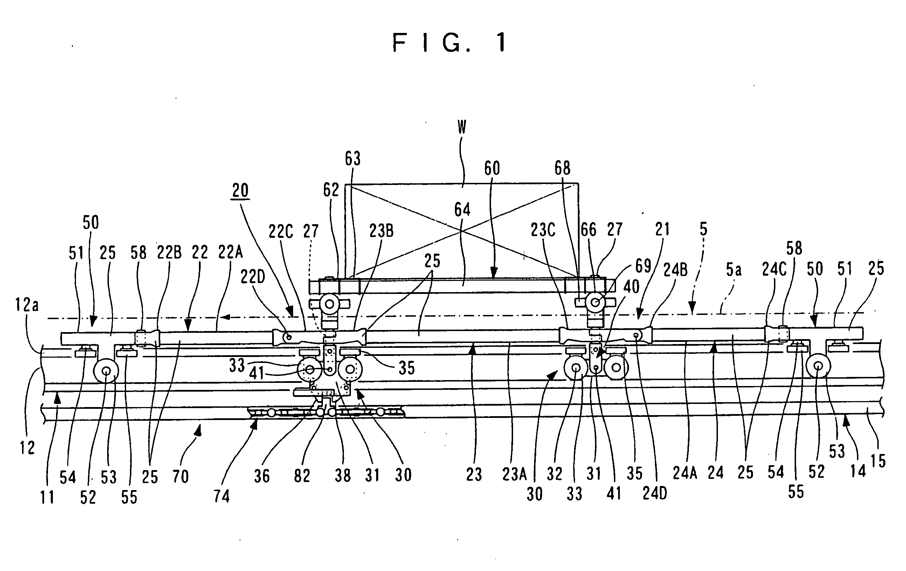

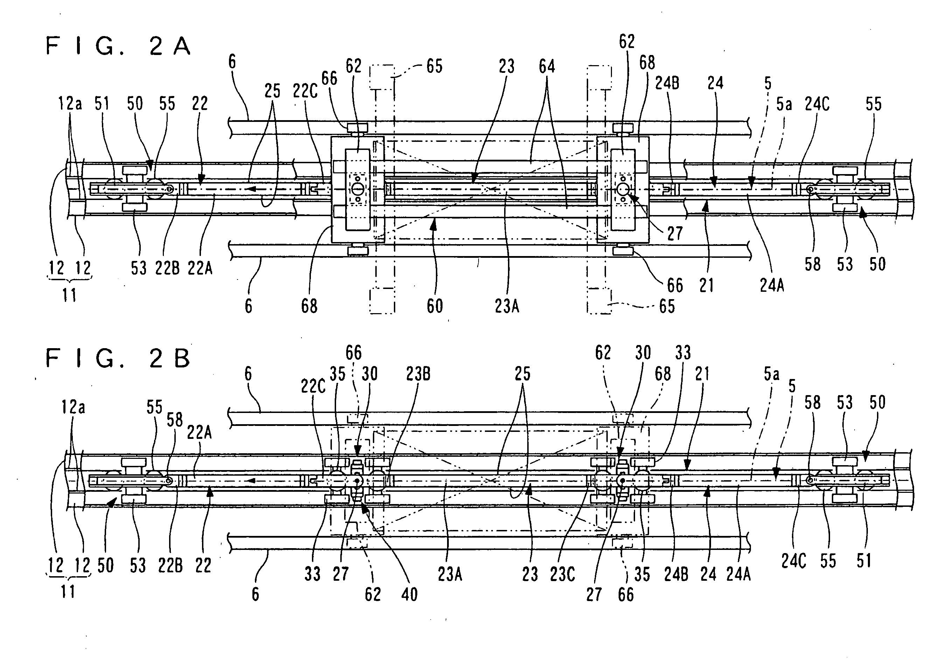

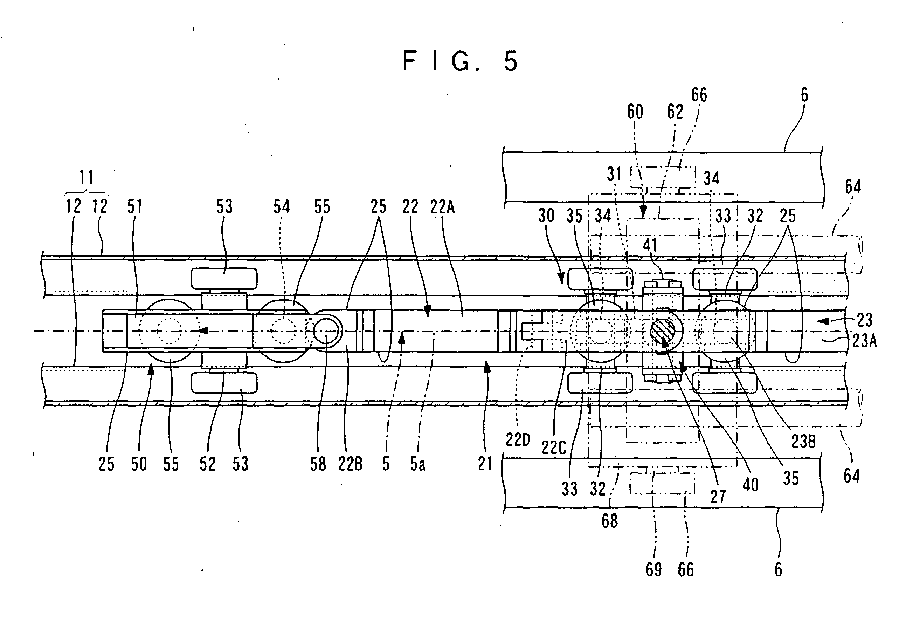

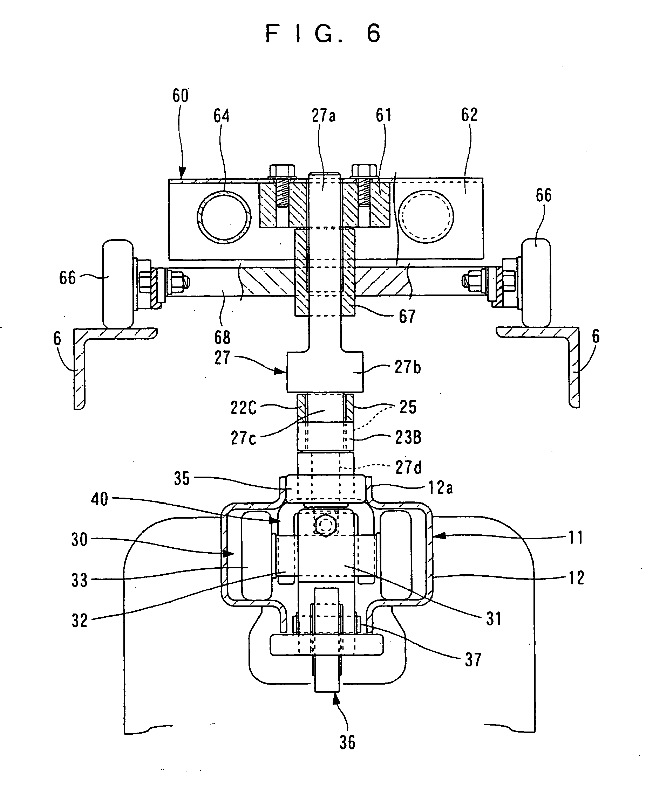

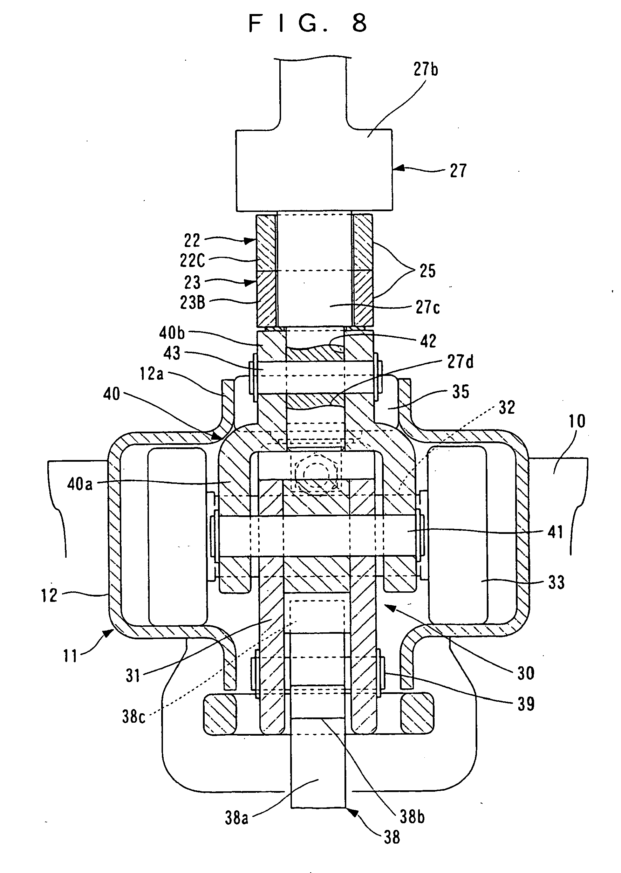

Below, a first embodiment of the present invention will be described with reference to Fig. 1 to Fig. 12, relating to a mode where the invention is applied to a floor-mounted travel system.

In Fig. 1 to Fig. 5, Fig. 8 and Fig. 9, a rail device 11 is disposed on top of a machine frame 10 based on the floor 1. This rail device 11 is constituted by a pair of channel-shaped rails 12 positioned as a right and left-hand pair, the open sections of which are mutually facing. A guide section 12a is formed by bending the upper edge of the open section of each rail 12 in an upward direction, from the inner side thereof. A fixed path 5 is formed by the rail device 11, and here, the fixed path 5 is formed in an endless configuration, comprising, for example, in plan view, a pair of parallel linear path sections 5a, and curved path sections 5b running in the leftward and rightward direction and mutually connecting the start and end portions of the respective linear path sections 5a.

A movable body 20 is provided which is capable of moving along the fixed path 5 by being supported and guided by the rail device 11. The main body 21 of the movable body 20 is formed by three (three or more) frame bodies 22, 23, 24 connected in relatively rotatable fashion by means of vertical shafts (described hereinafter).

Here, the respective frame bodies 22, 23, 24 are formed by square tubular members (square bar members) 22A, 23A, 24A extending in the direction of the fixed path 5, front end members 22B, 23B, 24B connected to the front ends of these square tubular members 22A, 23A, 24A, and rear end members 22C, 23C, 24C connected to the rear ends of same. At least one side face thereof, in other words, the side faces thereof orientated towards the inner side of the endless fixed path 5, for example, are formed with laterally-orientated passive surfaces 25 along the whole length thereof or the majority thereof.

In the front frame body 22, the front end member 22B is formed integrally with the square tubular member 22A, and the rear end member 22C is connected to same, tiltably in an upward and downward direction, by means of a lateral pin 22D. Moreover, in the middle frame body 23, the front end member 23B and the rear end member 23C are formed integrally with the square tubular member 23A. In the rear frame body 24, the front end member 24B is connected to the square tubular member 24A, tiltably in an upward and downward direction, by means of a lateral pin 24D, and the rear end member 24C is formed integrally with the square tubular member 24A.

The front frame body 22 and the middle frame body 23, and the middle frame body 23 and the rear frame body 24, are connected together in a relatively rotatable fashion, by means of respective vertical shafts 27. Here, the vertical shafts 27 comprise an upper axle section 27a, a large diameter axle section 27b formed continuously from the lower end of the upper axle section 27a, an intermediate axle section 27c formed continuously from the lower end of the large diameter axle section 27b, and a lower axle section 27d formed continuously from the lower end of the intermediate axle section 27c, these respective parts being formed in an integral fashion. The vertical shaft 27 is composed in such a manner that is connecteds together the rear end member 22C of the front frame body 22 and the front end member 23B of the middle frame body 23, or the rear end member 23C of the middle frame body 23 and the front end member 24B of the rear frame body 24, respectively, in a relatively rotatable fashion, by means of the intermediate axle section 27c.

The movable body 20 is supported and guided on the rail device 11 by means of a plurality of guided devices 30, 50, in such a manner that it can move along the fixed path 5. In this case, each of the respective guided devices 30, 50 is composed in a trolley structure.

More specifically, in the front and rear pair of middle section guided devices 30, a pair of front and rear lateral pins 32 are passed through and fixed to a trolley main body 31 in intermediate positions in the vertical direction thereof, and supported rollers 33 which engage with the rails 12 in the rail device 11 and are guided and supported by same are installed in an idly rotatable fashion on the respective projecting sections of these lateral pins 32. Moreover, a front and rear pair of vertical pins 34 are fixed to the top of the trolley main body 31, and guided rollers 35 which are guided by opposing the guide sections 12a of the rails 12 are installed in an idly rotatable fashion on the upper ends of the vertical pins 34. One example of a middle section guided device 30 is constituted by means of the aforementioned elements 31 to 35, and the like.

A lower double-arm section 40a of a bracket 40 is fitted over the trolley main body 31, in the central portion thereof in the front/rear direction, and a lateral axle 41 is passed from this lower double-arm section 40a and through the trolley main body 31, whereby the trolley main body 31 and the bracket 40 are connected in a relatively rotatable fashion. The upper tubular section 40b of the bracket 40 is formed with a through hole section 42 which is open at the upper and lower ends.

The lower axle section 27d of the vertical shaft 27 fits into this through hole section 42 formed in the bracket 40, and a lateral pin 43 is passed from the upper tubular section 40b of the bracket 40 and through the lower axle section 27d. Thereby, the trolley main body 31 of the middle section guided device 30 is connected in a relatively rotatable fashion to the lower double-arm section 40a of the bracket 40 connected to the lower axle section 27d of the vertical shaft 27, by means of the lateral axle 41. Respective right and left-hand pairs of supported rollers 33 and guided rollers 35 are provided in front of and behind the vertical shaft 27.

A passive body 36 is provided on the movable body 20. More specifically, a passive body 36 is provided in a vertically swingable fashion, in the foremost (at least one) of the middle section guided devices 30, on the lower front portion of the trolley main body 31, by means of a horizontal pin 37. This passive body 36 is formed with a passive surface 36a facing rearwards in the lower part thereof, a receiving surface 36b facing upwards in the middle portion thereof, and a stopper surface 36c facing rearwards in the upper part thereof. Here, a composition is adopted wherein, when the stopper surface 36c is abutted against the trolley main body 31, the passive surface 36a assumes a perpendicular passive attitude.

An shudder preventing body 38 is provided on the lower part and the rear portion of the trolley main body 31, in a vertically swingable fashion, by means of a horizontal pin 39. This shudder preventing body 38 is formed with an shudder preventing surface 38a facing forwards in the lower part thereof, an abutting surface 38b facing downwards in the middle portion thereof, a stopper surface 38c facing forwards, and a cam surface 38d facing downwards and rearwards, in the upper part thereof. Here, a composition is adopted wherein, when the stopper surface 38c is abutted against the trolley main body 31, the shudder preventing surface 38a opposes the passive surface 36a in a vertical state, and furthermore, the abutting surface 38b abuts against the receiving surface 36b, from above.

Furthermore, in the front and rear pair of end section guided devices 50, a horizontal pin 52 is passed through and fixed to a low position on the trolley main body 51 at one point (a central point) in the front/rear direction thereof, and supported rollers 53 which engage with the rails 12 of the rail device 11 and are supported and guided by same are installed in an idly rotatable fashion on the respective projecting sections of the horizontal pin 52. Furthermore, a front and rear pair of vertical pins 54 are fixed to the lower part of the trolley main body 51, and guided rollers 55 which are guided by opposing the guide sections 12a of the rails 12 are installed in an idly rotatable fashion on the lower end sections of these vertical pins 54. One example of a end section guided device 50 is constituted by the aforementioned elements 51 - 55, and the like.

The inner end portion of the trolley main body 51 is connected directly, in a relatively rotatable fashion, with the front end member (idle end section) 22B of the front frame body 22 or the rear end member (idle end section) 24C of the rear frame body 24, by means of a vertical pin 58. Thereby, the end section guided devices 50 have a trolley main body 51 that is connected to the main body 21, and supported rollers 53 that are supported and guided by the rail device 11 are provided in this trolley main body 51, in one position in the front/rear direction, in addition to which, guided rollers 55 that are guided by the rail device 11 are provided in a distributed fashion both in front of and to the rear of the supported rollers 53. In this case, a passive surface 25 is also formed on the side face of the trolley main body 51 of the end section guided device 50, in a continuous fashion with the main body 21.

A supporting unit 60 for a conveyed item W is provided on the main body 21 of the movable body 10. More specifically, a supporting unit 60 is provided on top of the respective front and rear pair of vertical shafts 27 which connected the front frame body 22 and the middle frame body 23, and the middle frame body 23 and the rear frame body 24, together in a relatively rotatable fashion. This supporting unit 60 comprises a rotating body 61 fitted over the upper axle section 27a of each of the respective vertical shafts 27, a bracket body 62 fixed to each rotating body 61, a conveyed item W supporting piece 63 provided on each of the bracket bodies 62, and a right and left-hand pair of longitudinal members 64 provided between the front and rear bracket bodies 62. Large-width supports 65 are provided detachably on the front and rear support pieces 63. One example of a supporting unit 60 is constituted by the aforementioned elements 61 to 65, and the like.

Idle wheels (guide rollers) 66 are installed on a portion of the aforementioned vertical shaft 27. More specifically, a cylindrical member 67 which abuts against the lower face of the rotating body 61 is fitted over the upper axle section 27a , such that it is free to rise and fall only (such that it rotates in unison with same), a lateral roller supporting body 68 being connected to this cylindrical member 67. This roller supporting body 68 has a frame-type shape, and axles 69 are provided projecting outwards in a leftward and rightward direction in the end sections thereof in the lateral direction, and in the center thereof in the front/rear direction, the aforementioned idle wheels 66 being installed on these axles 69. A pair of guide rails (one example of a guide body) 6 which support and guide the idle wheels 66 from beneath are disposed in prescribed positions in the aforementioned fixed path 5, in other words, in prescribed positions following a linear path section 5a or a curved path section 5b.

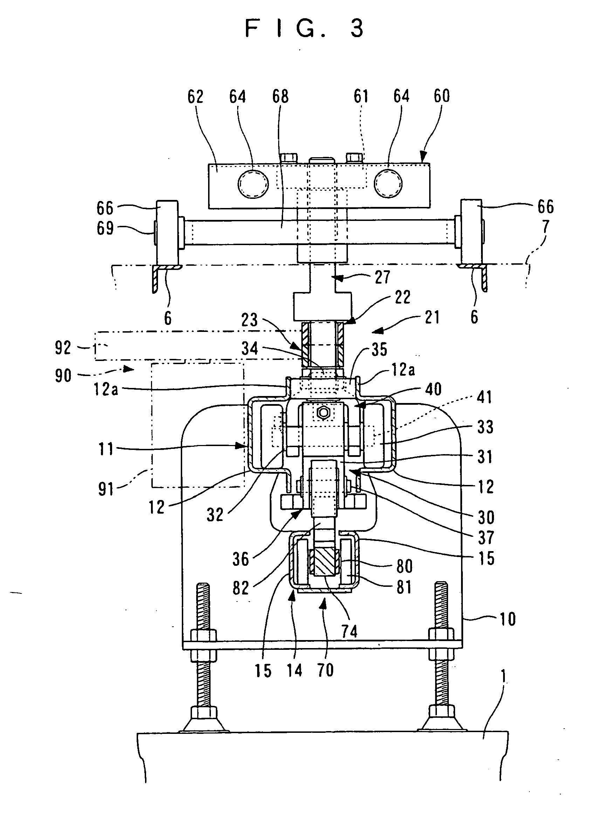

The guide rails 6 may be provided along the entire length of the fixed path 5, or they may be provided in desired positions where the conveyed item W is supported and work operations are carried out. Moreover, a cover body 7 is provided on a portion of each guide rail 6, and here, it is possible to achieve a shape for supporting and guiding the idle wheels 66, by means of the cover body (further example of guide body) 7. Besides a four-wheel configuration as illustrated in Fig. 3, the idle wheels 66 may also be provided in a plurality of configurations, such as a one-wheel configuration, a one-sided two-wheel configuration, a three-wheel configuration or a configuration of more than four wheels.

In the fixed path 5, for example, one of the linear path sections 5a passes through a drying one (one example of a processing section) 9 for drying the conveyed item W. An endless rotary type feed device 70, the transmitting body of which engages with and acts on the passive body 36, thereby imparting a motive force to the movable body 20, is provided in a position corresponding to the drying oven 9.

More specifically, for example, the endless rotary type feed device 70 is constituted by a drive gear wheel 71 provided at the output section of the drying oven 9, a group of idle gear wheels 72 provided at the input section of the drying oven 9, and elsewhere, a drive device 73 connected to the drive gear wheel 71, and a chain 74 wound about the respective gear wheels 71, 72, and the like. Here, the chain 74 is constituted in an endless fashion by coupling a group of pairs of upper and lower link members 75 and a group of pairs of right and left-hand link members 76, by means of chain pin members 77, and the coupling by the chain pin members 77 allows relative rotational movement in the vertical and lateral directions.

A horizontal guide roller 79 is provided between each pair of upper and lower link members 75, by means of a vertical pin 78, and vertical guide rollers 81 are provided in an idly rotatable fashion, on the outer side of each pair of right and left-hand link members 76, by means of horizontal pins 80. Moreover, a transmitting member 82 capable of engaging with the passive body 36 is provided between appropriate right and left-hand link members 76, and here, the transmitting member 82 is composed in such a manner that it projects upwards into the path section positioned thereabove.

In order to support and guide the chain 74 traveling through the path section above, a chain guide device 14 is provided below the rail device 11. More specifically, the chain guide device 14 is constituted by disposing channel-shaped rails 15 below the machine frame 10, in the form of a right and left-hand pair, the open sections of which are mutually facing. One example of an endless rotating feed device 70 is constituted by the aforementioned elements 14, 15, 71 - 82, and the like.

Friction type feed devices 90 which contact with and impart rotation to the passive surface 25, thereby imparting a motive force to the movable body 20, are provided in prescribed path sections of the fixed path 5. Each friction type feed device 90 is constituted by an induction motor 91 having a reduction gear mechanism, being one example of a rotary drive section, a feed roller 92 installed on an output shaft installed in a vertical direction from the inductor motor 91, and the like. The outer circumference of the feed roller 92 is made, for example, from urethane. One example of a frictional feed device 90 is constituted by the aforementioned elements 91, 92, and the like.

By means of the rotationally driven feed roller 92 contacting and acting on the passive surface 25, the frictional feed device 90 is able to impart a motive force to the movable body 20. In this case, the frictional feed devices 90 may be located in fixed positions, or in order to achieve more suitable contact force, for example, a configuration may be adopted wherein the feed roller 92 is pressed against the passive surface 25 by means of the elastic force of a compression spring, or the like. The frictional feed devices 90 are disposed at prescribed intervals in a prescribed path section of the fixed path 5, and the pitch P at which they are installed is set to a distance that is shorter that the overall length L of the movable body 20, in other words, P < L.

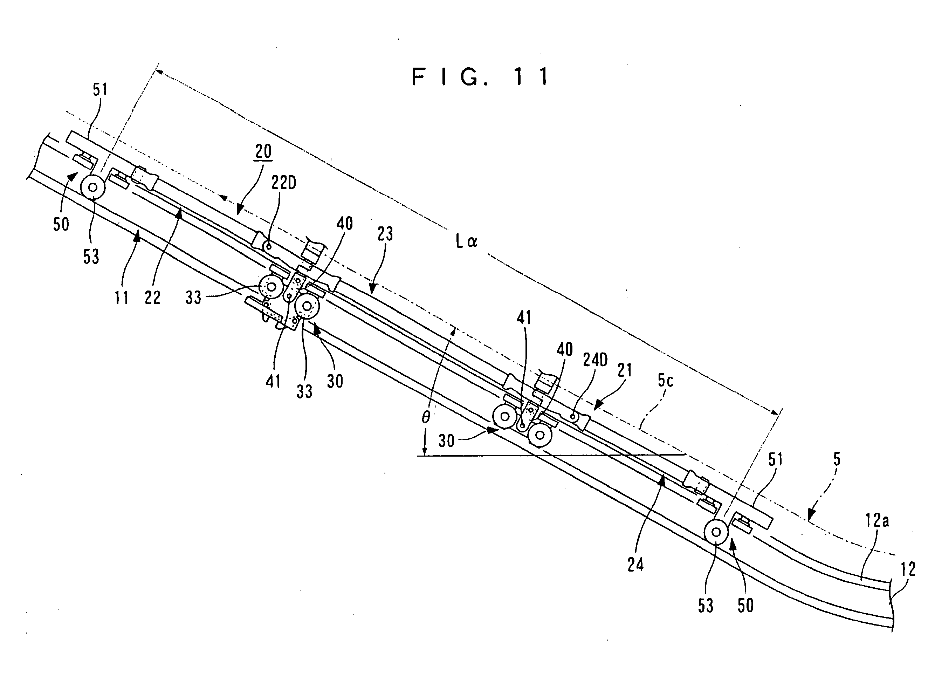

As shown in Fig. 11, an ascending/descending path section (ascending path section or descending path section) 5c is formed in the fixed path 5, according to requirements. Here, the angle of gradient θ of the ascent or descent in the ascending/descending path section 5c is set in such a manner that it is smaller, the greater the distance Lα between the respective supported rollers 53 in the front and rear end section guided devices 50.

In other words, as shown in Table 1, for example, if the distance Lα between the supported rollers 53 is "4200", then the angle of gradient θ of the ascent or descent can be set up to around "30°", and if the distance Lα between the supported rollers 53 is "5200", then the angle of gradient θ of the ascent or descent can be set from "15°" to around "20°".

**(Table 1)**

| Distance Lα between supported rollers 53 | Angle θ | | |
|---|---|---|---|
| | 15° | 20° | 30° |
| 4200 | Yes | Yes | Yes |
| 4450 | Yes | Yes | Yes |
| 4700 | Yes | No | No |
| 4950 | Yes | No | No |
| 5200 | Yes | No | No |

Below, the action of the first embodiment described above will be explained.

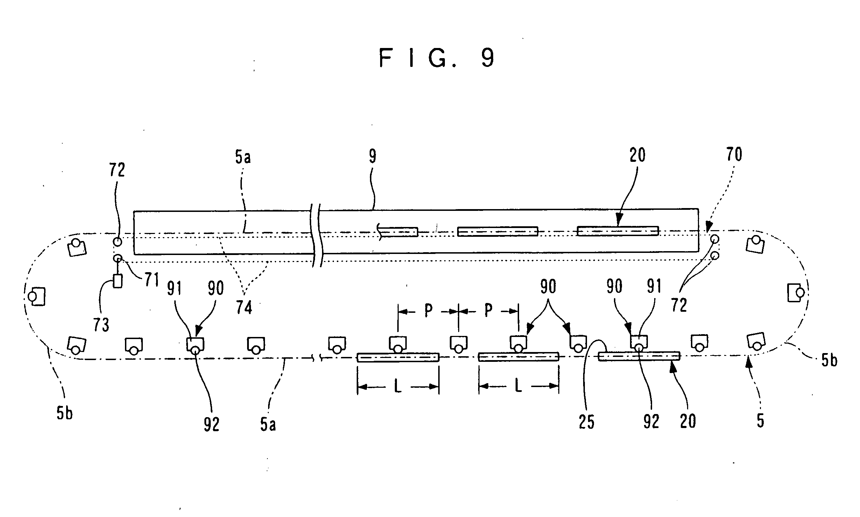

As shown by the dotted lines in Fig. 3, and by Fig. 9, in prescribed path sections of the fixed path 5 with the exception of the drying oven 9, by means of a feed roller 92 contacting the passive surfaces 25 being driven in rotation by an induction motor 91, the friction type feed device 90 imparts a motive force (traveling force) to the movable body 20, whereby the movable body 20 is caused to move. More specifically, the movement of the movable body 20 by means of the frictional type feed device 90 is achieved by the feed roller 92 acting successively on the passive surface 25 of the end section guided device 50, the passive surface 25 of front frame body 22, the passive surface 25 of the middle frame body 23, the passive surface 25 of the rear frame body 24, and the passive surface 25 of the end section guided device 50.

In this case, if the feed roller 92 acts on the front frame body 22, then the middle frame body 23 and the rear frame body 24, and the like, are pulled and moved via the vertical shafts 27, and furthermore, if it acts on the middle frame body 23, then the front frame body 22 is pushed and caused to move via a vertical shaft 27, and the rear frame body 24 is pulled and caused to move via a vertical shaft 27, and moreover, if the feed roller 92 acts on the rear frame body 24, then the middle frame body 23 and the front frame body 22 are pushed and caused to move via the vertical shafts 27.

When movement (travel) of this kind is performed, the respective guided devices 30, 50, are supported and guided on the respective rails 12 of the rail device 11, via the respective supported rollers 33, 53, and the guided rollers 35, 55 confront the guide sections 12a and are guided by same. In so doing, since the trolley main body 31 of each middle section guided device 30 is connected in a relatively rotatable fashion to the lower double-arm section 40a of the bracket 40 connected to the lower axle section 27d of the vertical shaft 27, by means of a lateral axle 41, then a composition is achieved in which play is not liable to arise in the coupling sections.

Therefore, even if a large (wide or high) object, or an object with an irregular center of gravity, is conveyed as the conveyed item W, the inclination of the supporting unit 60, and namely, the inclination of the conveyed item W, can be diminished (reduced), and conveyance can be performed in a stable fashion, in addition to which various types of work operation can be performed with respect to the conveyed item W, and the conveyed item W can be loaded and unloaded, in an accurate fashion at all times. Moreover, the middle section guided devices 30, which cause the trolley main body 31 to engage with the lower double-arm section 40a, become small and inexpensive, and therefore the overall system can be composed inexpensively.

The movement of the movable body 20 described above is performed intermittently at the installation pitch P of the respective friction type feed devices 90, automatic control being implemented on the basis of detection signals from appropriate detecting means, or the like, in such a manner that the intermittent feed action is carried out when the downstream friction type feed device 90 is in an empty state. At the position of the friction type feed device 90, the movable body 20 is halted by the fact that the feed roller 92 is not rotating, and it is registered in position by appropriate position registering means, in which state, an operator situated on the floor 1, or an operator riding on the main body 21, carries out various work tasks with respect to the conveyed item W supported on the supporting unit 60.

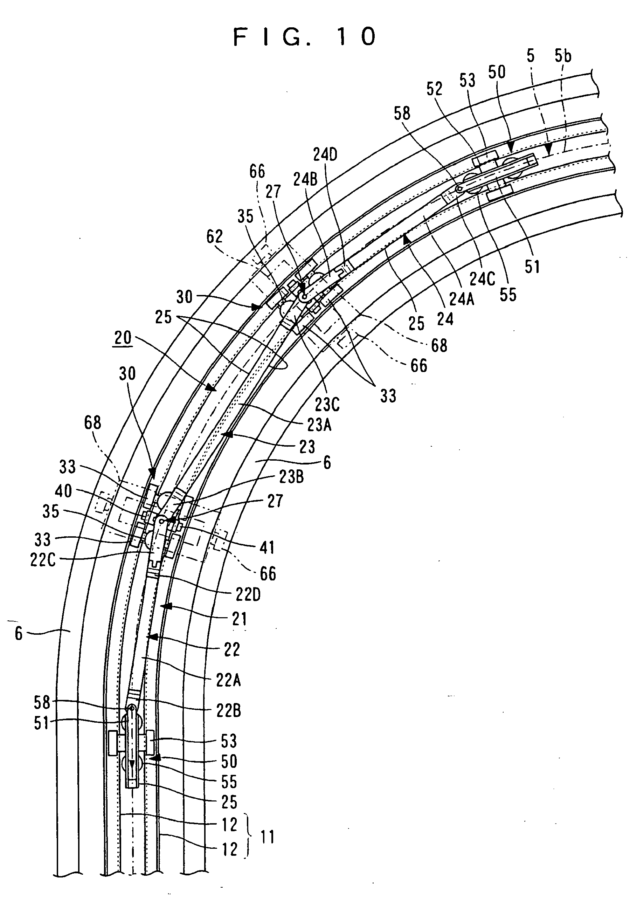

The movement of the movable body 20 is performed in a similar manner in the curved path sections 5b which travel in the leftward or rightward direction. In this case, in the curved path sections 5b, as illustrated in Fig. 10, the frame bodies 22, 23, 24 are moved in a state in which they are each turned with respect to each other, in a leftward or rightward direction, via the vertical shafts 27. Moreover, the end section guided devices 50 are moved in a state in which they are turned with respect to the front and rear frame bodies 22, 24, in a leftward or rightward direction, via the vertical pins 58.

When moving along a curved path section 5b in this way, as shown in Fig. 10, the middle section guided devices 30 are supported and guided by the respective rails 12 of the rail device 11, by means of the respective supported rollers 33, and the respective guided rollers 35 confront and are guided by the guide sections 12a, whereby the middle section guided devices 30 are caused to rotate together with the vertical shafts 27, with respect to the main body 21. Accordingly, the middle section guided devices 30 are supported and guided without producing any catching, or play, with respect to the rails 12, and hence the movement of the movable body 20 along the curved path section 5b can be performed smoothly at all times.

In this case, as illustrated by the dotted lines in Fig. 10, each of the roller supporting bodies 68 connected to a vertical shaft member 27 also rotates in unison with same, whereby the central axis of the axles 69 supporting the idle wheels 66 can be orientated in (made to coincide with) the direction of the radius of the curve, and hence the idle wheels 66 are able to rotate smoothly, without being subject to slipping (frictional resistance). Therefore, the roller supporting body 68 is supported and guided without producing any catching, or play, with respect to the guide rails 6, and hence the movable body 20 supporting the conveyed item W can be moved stably and smoothly in a curved path section 5b, at all times.

Furthermore, the composition and positioning (configuration) of the guide rails 6 in the curved path sections 5b can be made the same as that in the linear path sections 5a, and therefore the guide rails 6 in the curved path sections 5b can be positioned simply and inexpensively.

If there is a change in the vertical interval between the guide rails 6 and the rail device 11, due to installation accuracy of the guide rails 6, or the like, then this difference can be absorbed by means of the cylindrical member 67 rising or falling with respect to the upper axle section 27a, and therefore, a stable supporting and guiding action can be achieved at all times.

Furthermore, when moving along a curved path section 5b, since the front and rear pair of guided rollers 55 are guided by the guide sections 12a, the end section guided devices 50 rotate relatively with respect to the longitudinal direction of the front and rear frame bodies 22, 24, about the vertical pins 58. In this case, the right and left-hand pair of supported rollers 53 provided at one position between the front and rear guided rollers 55 are orientated in parallel with a line linking the respective central axes of the vertical pins 54 on which the front and rear guided rollers 55 are installed, in other words, they are orientated in a direction that is inclined with respect to the direction of movement of the frame bodies 22, 24, and consequently, the supported rollers 53 perform frictional rotation accompanied by slipping (frictional resistance).

However, this frictional rotation does not have a very significant effect, because it occurs at one point in the front/rear direction and a total of two points in the lateral direction, and therefore, the end section guided devices 50 are supported and guided without producing any catching, or play, with respect to the rails 12, and hence the movable body 20 can be moved smoothly at all times in a curved path section 5b.

In this way, the movable body 20 having moved through the curved path section 5b arrives at the input section to the drying oven 9, and the passive body 36 thereof is inserted into the path of action of the endless rotary type feed device 70 and is halted. Here, an endless rotary type feed device 70 is operated in the area of the drying oven 9.

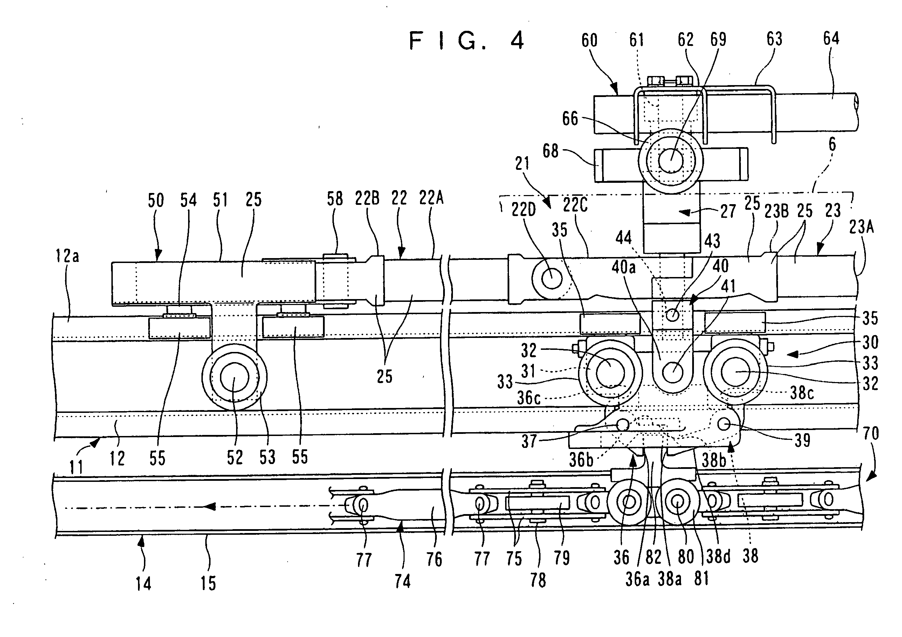

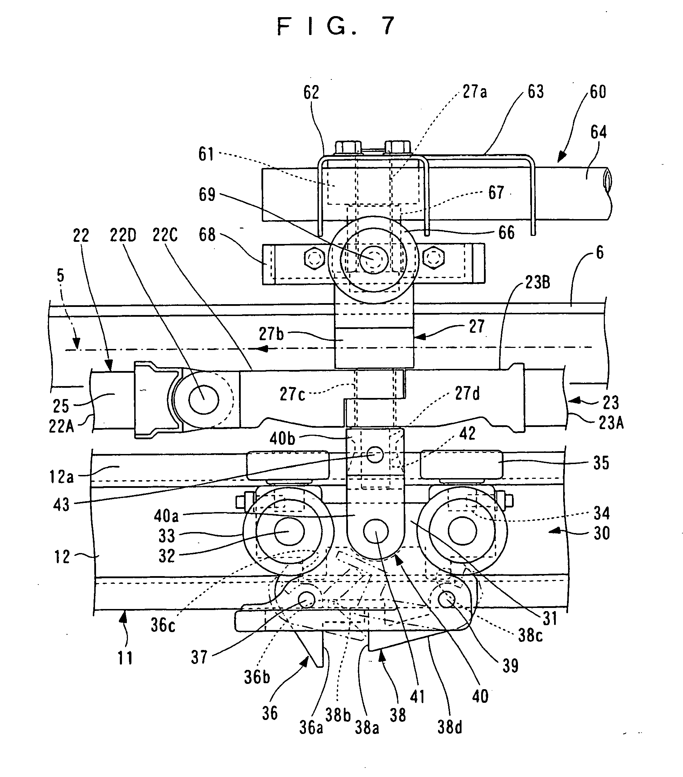

In other words, a chain 74 is moved by the drive device 73, by means of respective gear wheels 71, 72. The transmitting body 82 which moves in unison with the chain 74 moves from the start section of the path of action, towards the passive body 36, and firstly, it abuts against the cam surface 38d of the shudder preventing body 38, whereby the shudder preventing body 38 is caused to swing upwards about the horizontal pin 39, as illustrated by the dotted line in Fig. 7, and hence the transmitting body 82 passes by the shudder preventing body 38 section. The transmitting body 82 then abuts against the passive surface 36a of the passive body 36, as shown in Fig. 4, whereby the movable body 20 is caused to move in a unified manner.

Whilst the movable body 20 is moved inside the drying over 9 in this manner, a drying operation is carried out by drying means (not illustrated) with respect to the conveyed item W supported on the supporting unit 60. In this case, since the endless rotary type feed device 70 is designed such that only the chain 74 moves inside the drying oven 9, a feed configuration that is highly resistant to temperature, and the like, can be obtained, and hence stable operation over a long period can be anticipated. Moreover, if the movable body 20 starts to shudder (vibrate back and forth) when caused to move by means of the transmitting body 82 abutting against the passive surface 36a of the passive body 36, then the shudder preventing surface 38a of the shudder preventing body 38 abuts against the transmitting body 82 and thus prevents shudder from occurring.

When the movable body 20 reaches the output section of the drying oven 9, the transmitting member 82 moves downwards with respect to the passive body 36, by means of the rail 15 of the chain guide device 14 being formed in a downward sloping shape, for example, and therefore, the transmitting member 82 is disengaged from the passive body 36. Consequently, the feeding force provided by the endless rotary type feed device 70 is released, and thereafter, motive force is imparted by the frictional type feed devices 90, such as those described above.

At a suitable point after leaving the section of the drying oven 9, the conveyed item W on which work tasks have been completed is unloaded from the supporting unit 60, and a new conveyed item W is loaded onto the supporting unit 60. In this way, the movable body 20 performs a circulatory movement along the fixed path 5.

In this circulatory movement, the entire load of the conveyed item W and the supporting unit 60 is transmitted directly to the two middle section guided devices 30, via the front and rear vertical shafts 27, and is supported by the rail device 11 via the supported rollers 33 provided at the front and the rear of the trolley main body 31, by means of which the movement of the movable body 20 can be performed stably at all times, regardless of whether or not there is a load, and irrespective of the size of the load being conveyed.

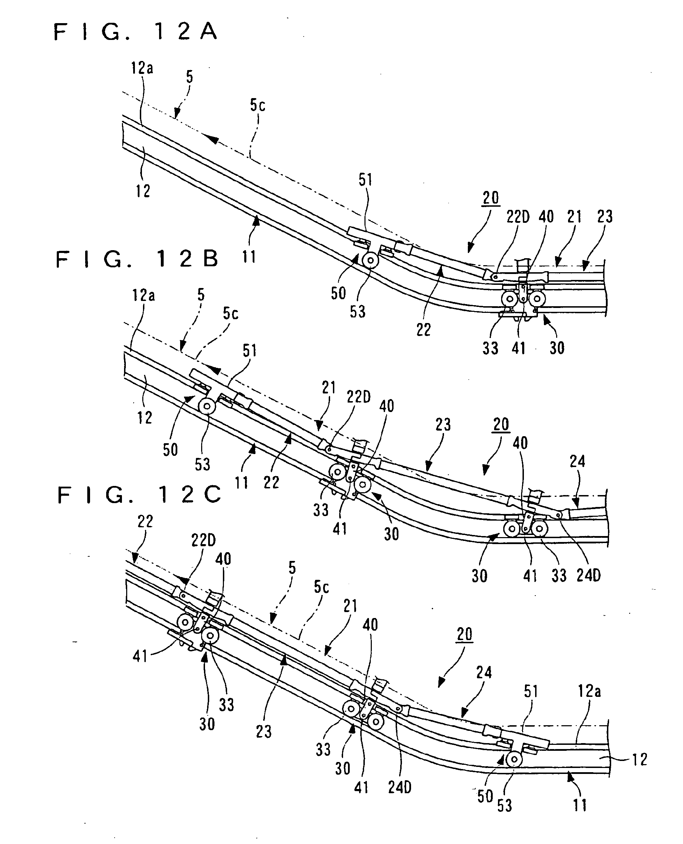

Moreover, if an ascending/descending path section 5c is formed in an upward or downward direction in side view, in the fixed path 5, then firstly, when the front section guided device 50 moves from the curved section into the inclined section, as shown in Fig. 12(a), the front frame body 22 tilts upwards about the lateral pin 22D. Thereupon, when the foremost of the middle section guided devices 30 moves from the curved section into the inclined section, as shown in Fig. 12(b), the front and rear middle section guided devices 30 are respectively rotated relatively about the lateral axles 41, with respect to the brackets 40 on the vertical shaft 27. When the rear end section guided device 50 moves from the curved section into the inclined section, as shown in Fig. 12(c), the rear frame body 24 tilts upwards about the lateral pin 24D.

Thereby, as the movable body 20 is introduced into the ascending/descending path section 5c, the orientation (upward or downward tilt) of the end section guided devices 50 and the middle section guided devices 30 changes automatically in accordance with the gradient of the rails 12 in the ascending/descending path section 5c, and as shown in Fig. 11, the movable body 20 moves smoothly up the ascending/descending path section 5c. When the movable body 20 exits from an ascending/descending path section 5c, similar movement is performed, with the direction of tilting being opposite. Moreover, similar movement is also performed if the ascending/descending path section 5c is a descending path.

When the movable body 20 moves in this way, by setting the angle of gradient θ of the ascent or descent in the ascending/descending path section 5c such that is a smaller angle, the longer the distance Lα between the supported rollers 53 in the front and rear end section guided devices 50, the entrance into and exit from an upward or downward ascending/descending path section 5c by the movable body 20 is carried out smoothly at all times, by means of a free tilting movement about the lateral pin 24D and the lateral axle 41.

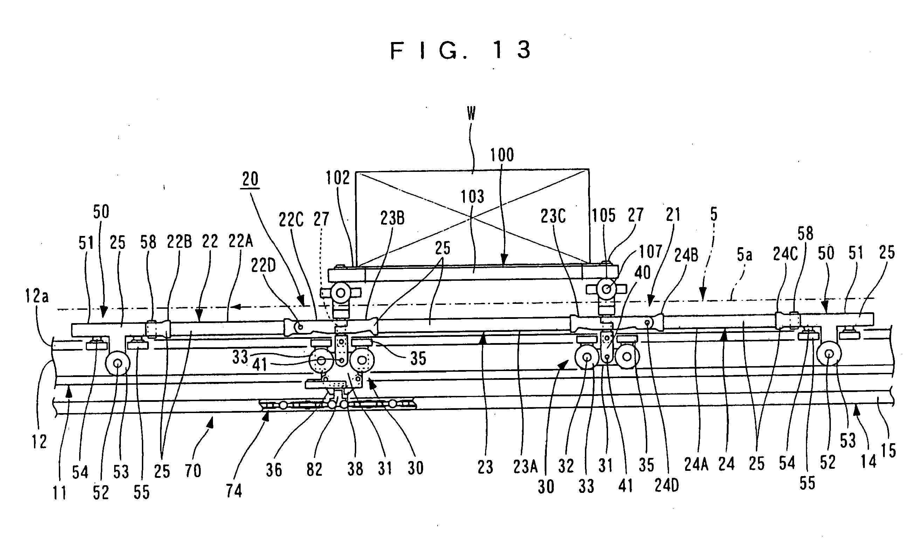

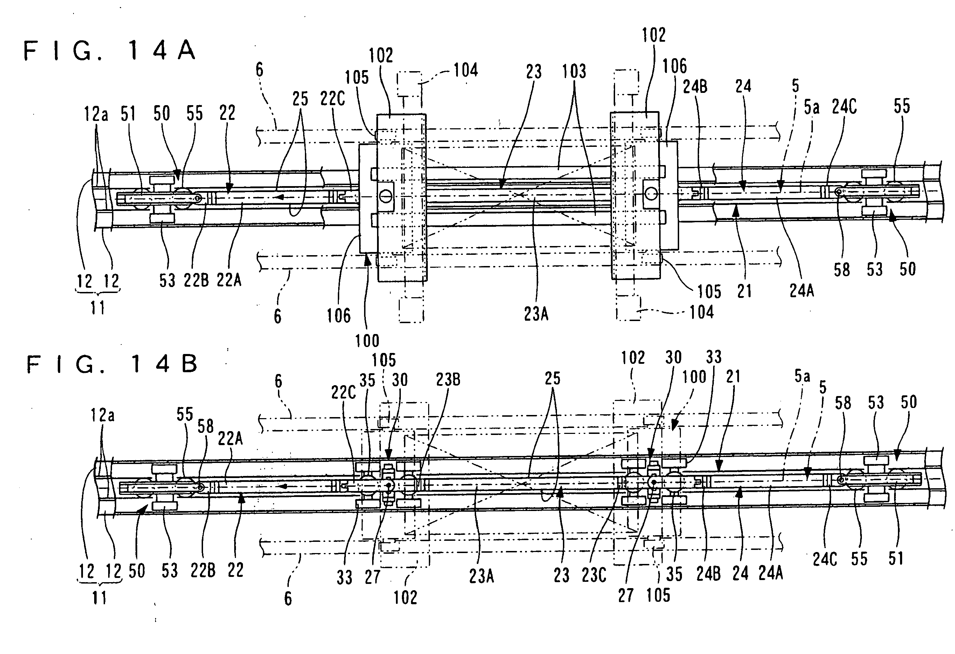

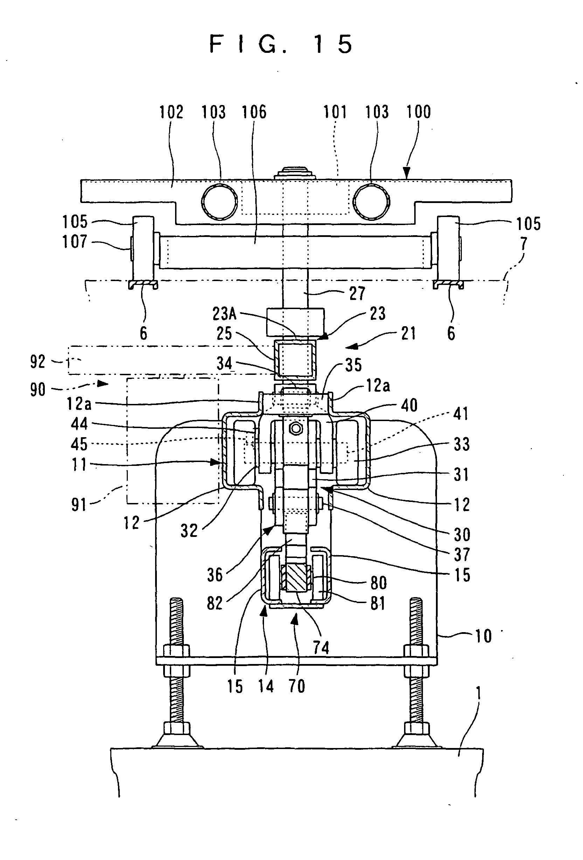

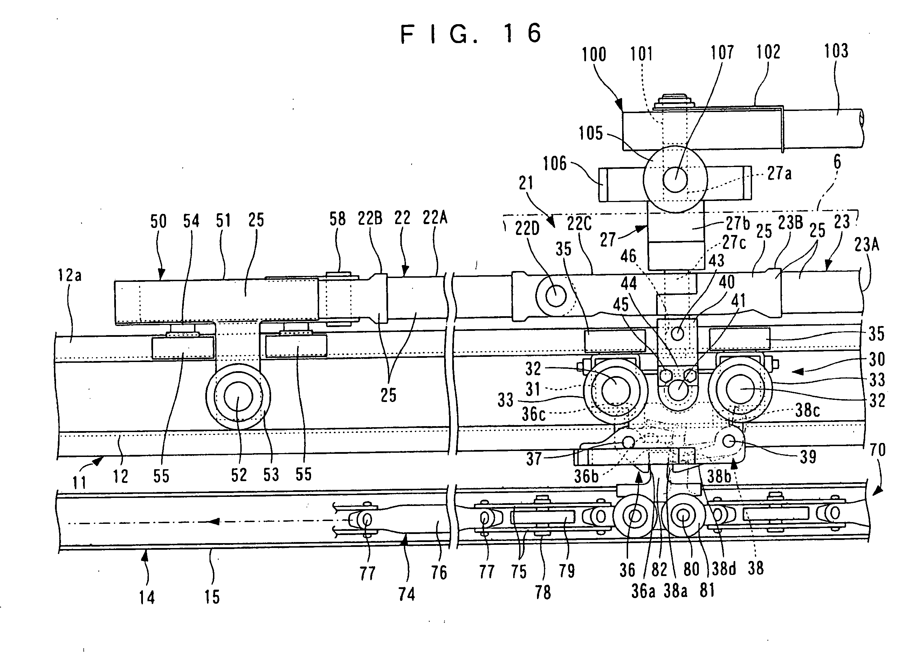

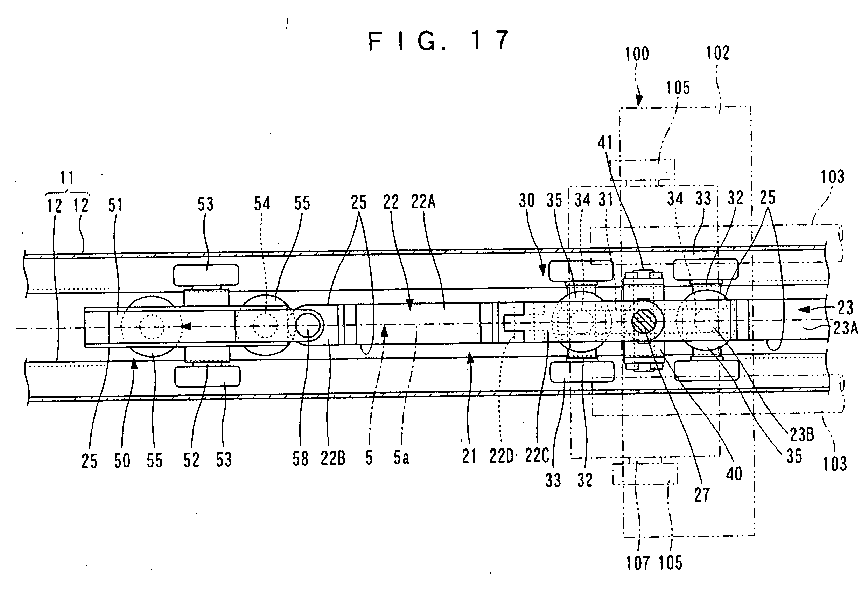

Next, a second embodiment of the present invention is described on the basis of Fig. 13 to Fig. 18.

In this second embodiment, the lateral axle 41 is prevented from being removed, by means of a key plate 44, bolt 45, and the like. A recess section 46 which is open on the upper side is formed in the upper part of the bracket 40. The lower part of the vertical shaft 27 fits into this recess section 46, and a lateral pin 43 is passed from the bracket 40 and through the vertical shaft 27. Thereby, the trolley main body 31 of the middle section guided device 30 is connected, in a relatively rotatable fashion, to the lower part of the vertical shaft 27, in other words, to the main body 21, by means of the lateral axle 41. A pair of right and left-hand supported rollers 33 and guided rollers 35 are provided in a distributed fashion to the front and to the rear of the vertical shaft 27.

A supporting unit 100 provided on top of and between the front and rear pair of vertical shafts 27 is constituted by a bracket body 101 fixed to the upper part of each vertical shaft 27, a supporting piece 102 for the conveyed item W, provided on top of each bracket body 101, and a right and left-hand pair of longitudinal members 103 provided between the front and rear supporting pieces 102, and the like. Large-width supports 104 are provided detachably on the front and rear supporting pieces 102. One example of a supporting unit 100 is constituted by the aforementioned elements 101 to 104, and the like.

Idle wheels (guide rollers) 105 are installed on a portion of the aforementioned supporting unit 100. More specifically, a right and left-hand pair of plate shaped members 106 are provided between the front and rear supporting pieces 102, in a state where they are positioned to the outer side of the longitudinal members 103. Axles 107 are provided projecting outwards in a leftward and rightward direction from the front and rear ends of these plate shaped members 106, and the idle wheels 105 are installed on these axles 107. A pair of guide rails 6 for supporting and guiding these idle wheels 105 from below are disposed following the fixed path 5.

Below the action according to the second embodiment described above will be explained.

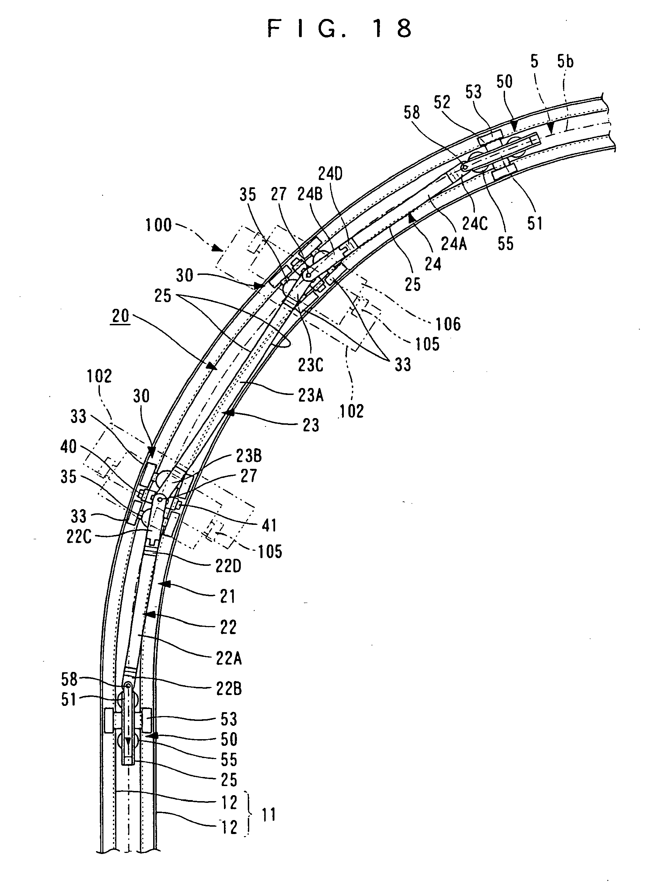

As shown in Fig. 18, when the movable body 20 is moving in a curved path section 5b traveling in a leftward or rightward direction, the respective frame bodies 22, 23 24 are moved in a state in which they are each turned with respect to each other, in a leftward or rightward direction, via the vertical shafts 27. Moreover, the end section guided devices 50 are moved in a state in which they are turned with respect to the front and rear frame bodies 22, 24, in a leftward or rightward direction, via the vertical pins 58.

When moving along a curved path section 5b of this kind, since the front and rear pair of guided rollers 55 are guided by the guide sections 12a, the end section guided devices 50 rotate relatively with respect to the longitudinal direction of the front and rear frame bodies 22, 24, about the vertical pins 58. In this case, the right and left-hand pair of supported rollers 53 provided at one position between the front and rear guided rollers 55 are orientated in parallel with a line linking the respective central axes of the vertical pins 54 on which the front and rear guided rollers 55 are installed, in other words, they are orientated in a direction that is inclined with respect to the direction of movement of the frame bodies 22, 24, and consequently, the supported rollers 53 perform frictional rotation accompanied by slipping (frictional resistance).

However, this frictional rotation does not have a very great effect, because it occurs at one point in the front / rear direction and a total of two points in the lateral direction, and therefore, the end section guided devices 50 are supported and guided without producing any catching, or play, with respect to the rails 12, and hence the movable body 20 can be moved smoothly at all times in a curved path section 5b.

At a suitable point after leaving the section of the drying oven 9, the conveyed item W on which work tasks have been completed is unloaded from the supporting unit 100, and a new conveyed item W is loaded onto the supporting unit 100. In this way, the movable body 20 performs a circulatory movement along the fixed path 5. In this circulatory movement, the entire load of the conveyed item W and the supporting unit 100 is transmitted directly to the two middle section guided devices 30, via the front and rear vertical shafts 27, and is supported by the rail device 11 via the supported rollers 33 provided at the front and the rear of the trolley main body 31, by means of which the movement of the movable body 20 can be performed stably at all times, regardless of whether or not there is a load, and irrespective of the size of the load being conveyed.

In the two embodiments described above, the upper edges of the rails 12 of the rail device 11 for supporting and guiding the respective guided devices 30, 50 are bent upwards to form guide sections 12a for guiding the guided rollers 35, 55, and hence rails having guide sections can be constituted readily.

In the two embodiments described above, the installation pitch P of the frictional type feed devices 90 is set to a shorter distance than the overall length L of the movable body 20, in other words, these feed devices are installed at prescribed intervals where P < L, but it is also possible to install the feed devices by setting P to be P ≈ L or P > L.

In the two embodiments described above, a mode was described wherein the movable bodies 20 travel in the linear path sections 5a in a state where there is an interval between the respective front and rear ends thereof, but if a mode is adopted wherein a frictional type feed device 90 as described above is provided on the upstream side of the linear path section 5a, and a braking device imparting a braking force on the movable bodies 20 by acting on the passive surfaces 25 is provided on the downstream side thereof, then it is possible to cause a plurality of movable bodies 20 to move between the frictional type feed device 90 and the braking device, in an aligned fashion, wherein the front end of one trolley main body 51 abuts against the rear end of another trolley main body 51, no gaps arising between the respective front and rear ends of the movable bodies 20, and each movable body 20 being pushed firmly from behind.

In the two embodiments described above, a mode was described in which movable bodies 20 are caused to move by means of an endless rotary type feed device 70 and frictional type feed devices 90, but it is also possible to adopt a mode in which the movable bodies 20 are caused to move by means of either one of these types of feed device only.

In the two embodiments described above, a mode is described in which a passive surface 25 is formed on one side of the main body 21, and a frictional type feed devices 90 which acts on this passive surface 25 are provided, but it is also possible to adopt a mode wherein passive rollers acting on the other side face of the main body 21 are provided, and hence the main body 21 receives a strong frictional force due to being sandwiched from either side, and sufficient motive force can be applied.

In the respective embodiments described above, a mode was described in which the main body 21 of the movable body 20 is constituted by three frame bodies 22, 23, 24, but it is.also possible to adopt a mode comprising three or more frame bodies, wherein one or a plurality of frame bodies are connected to the front or the rear of the front frame body 22, or to the front or the rear of the rear frame body 24, or a mode comprising a plurality of middle frame bodies 23. Moreover, it is also possible to adopt a mode comprising a single frame body, with the guided devices 30 being provided on the front and rear ends thereof.

In the two embodiments described above, a mode was described wherein supporting units 60, 100 are provided between the vertical shafts 27 which provide coupling between the frame bodies 22, 23, 24, but it is also possible to adopt a mode wherein supporting units 60, 100 are provided on the middle frame body 23, in which case, an expanding and contracting structure is adopted in the middle frame body 23, in order to achieve smooth movement in curved paths, and the like.

In the two embodiments described above, a rail device 11 and a chain guide device 14, and the like, are provided on a machine frame 10 based on the floor 1, but a composition may also be adopted wherein the rail device 11, chain guide device 14, and the like, are disposed inside a pit provided below floor level. By adopting such as composition, it is possible to reduce the overall height, including the movable bodies 20.

In the two embodiments described above, a movable body 20 capable of moving along the floor 1 was described, but it is also possible to adopt a movable body that is capable of moving by being supported and guided on a rail device installed on the ceiling.

In the two embodiments described above, a composition was described wherein the guide sections 12a are formed by bending the rails 12, but it is also possible to adopt a mode wherein channel-shaped rails are used, and guide frame bodies for guiding the guided rollers 35, 55 are fixed to the upper edge portions of the open section thereof.

In the first embodiment described above, a mode was described wherein supported rollers 53 are provided in the end section guided devices 50 at one position in the front/rear direction thereof, but it is also possible to adopt a mode wherein supported rollers are provided in two positions in the front/rear direction, similarly to the middle section guided devices 30, the end section guided devices 50 being connected to the main body by means of brackets having a lower double-arm section, vertical shaft members, and the like.

## Claims

1. A conveyance apparatus using movable bodies (20), comprising:
a rail device (11); movable bodies (20) capable of moving along a fixed path (5) by being supported and guided by the rail device (11); a supporting unit (60) for a conveyed item (W) being provided on a main body (21) side of each movable body (20); and guided devices (30,50) supported and guided by the rail device (11), the guided devices (30) being connected to each movable body (20) at positions corresponding to front and rear ends thereof, wherein each guided device (30) is connected in a relatively rotatable fashion via a lateral axle (41) to a lower part of a vertical shaft (27) extending from the main body (20),
**characterized in that**
the vertical shaft (27) is connected with a lateral roller supporting body (68), and idle wheels (66) are provided at the right and left-hand ends of the roller supporting body (68), and the idle wheels (66) are supported and guided by guide bodies (6,7) disposed at prescribed positions in the fixed path (5), and the main body (21) of each movable body (20) comprises three or more frame bodies (22,23,24) connected in a relatively rotatable fashion via vertical shafts (27), the main body (21) is connected with guided devices (30) at positions corresponding to the front and rear ends of each frame body (22,23,24).

2. The conveyance apparatus using movable bodies according to claim 1, **characterized in that** guide bodies (7) are disposed in a curved path (5b) section of the fixed path (5).

3. The conveyance apparatus using movable bodies according to claim 1, **characterized in that** the guided devices (30) have a trolley main body (31) connected to the main body (21), and supported rollers (33) supported and guided by the rail device (12) and guided rollers (35) guided by the rail device (12) are provided respectively in a distributed fashion at the front and rear of the trolley main body (31).

4. The conveyance apparatus using movable bodies according to claim 1, **characterized in that** the supporting unit (60) is provided between the upper parts of the vertical shafts (27).

5. The conveyance apparatus using movable bodies according to claim 1, **characterized in that** a passive body (36) is provided on each movable body (20), and an endless rotary type feed device (70) is provided in another prescribed location of the fixed path (5), the feed device (70) imparting motive force to the movable body (20) by means of a transmitting body engaging with and acting on the passive body (36).

6. The conveyance apparatus using movable bodies according to claim 1, **characterized in that** a laterally-orientated passive surface (25) is formed on each movable body (20), and frictional type feed devices (90) are provided in prescribed positions of the fixed path (5), the frictional type feed devices (90) imparting motive force to the movable body (20) by abutting against and transmitting a rotational action to the laterally-orientated passive surface (25).

## Patentansprüche

1. Fördervorrichtung mit beweglichen Körpern (20), die umfasst:
eine Schienenvorrichtung (11); bewegliche Körper (20), die entlang einem festgelegten Weg (5) bewegt werden können und von der Schienenvorrichtung (11) getragen und geführt werden; eine Halteeinheit (60) für ein befördertes Objekt (W), die an einem Hauptkörper (21) eines jeden beweglichen Körpers (20) bereitgestellt ist; und Führungsvorrichtungen (30, 50), die von der Schienenvorrichtung (11) getragen und geführt werden, wobei die Führungsvorrichtungen (30) jeweils an Positionen mit den beweglichen Körpern (20) verbunden sind, die dem vorderen und hinteren Ende entsprechen, wobei jede Führungsvorrichtung (30) auf relativ drehbare Weise über eine laterale Achse (41) mit einem unteren Teil einer vertikalen Welle (27) verbunden ist, die sich von dem Hauptkörper (20) erstreckt,
**dadurch gekennzeichnet, dass**
die vertikale Welle (27) mit einem lateralen Rollenhaltekörper (68) verbunden ist und am linken und rechten Ende des Rollenhaltekörpers (68) Losrollen (66) ausgebildet sind, und die Losrollen (66) von Führungskörpern (6, 7) getragen und geführt werden, die an vorgeschriebenen Positionen auf dem festgelegten Weg (5) angeordnet sind, und der Hauptkörper (21) der beweglichen Körper (20) jeweils drei oder mehr Rahmenkörper (22, 23, 24) umfasst, die in relativ drehbarer Weise über vertikale Wellen (27) verbunden sind, wobei der Hauptkörper (21) an Positionen mit Führungsvorrichtungen (30) verbunden ist, die dem vorderen und hinteren Ende der jeweiligen Rahmenkörper (22, 23, 24) entsprechen.

2. Fördervorrichtung mit beweglichen Körpern nach Anspruch 1, **dadurch gekennzeichnet, dass** Führungskörper (7) auf einem gekrümmten Wegabschnitt (5b) des festgelegten Wegs (5) angeordnet sind.

3. Fördervorrichtung mit beweglichen Körpern nach Anspruch 1, **dadurch gekennzeichnet, dass** die Führungsvorrichtungen (30) einen Laufwagen-Hauptkörper (31) aufweisen, der mit dem Hauptkörper (21) verbunden ist, und Tragerollen (33), die von der Schienenvorrichtung (12) getragen und geführt werden sowie Führungsrollen (35), die von der Schienenvorrichtung (12) geführt werden und jeweils vorne und hinten am Laufwagen-Hauptkörper (31) verteilt sind.

4. Fördervorrichtung mit beweglichen Körpern nach Anspruch 1, **dadurch gekennzeichnet, dass** die Halteeinheit (60) zwischen den oberen Teilen der vertikalen Wellen (27) bereitgestellt ist.

5. Fördervorrichtung mit beweglichen Körpern nach Anspruch 1, **dadurch gekennzeichnet, dass** die beweglichen Körper (20) jeweils einen passiven Körper (36) aufweisen und an einer anderen vorgeschriebenen Stelle des festgelegten Wegs (5) eine endlos drehende Vorschubeinrichtung (70) bereitgestellt ist, wobei die Vorschubeinrichtung (70) die treibende Kraft auf die beweglichen Körper (20) mithilfe von Übertragungskörpern überträgt, die mit dem passiven Körper (36) in Eingriff stehen und auf diesen wirken.

6. Fördervorrichtung mit beweglichen Körpern nach Anspruch 1, **dadurch gekennzeichnet, dass** an jedem beweglichen Körper (20) eine lateral ausgerichtete passive Oberfläche (25) ausgebildet ist und an vorgeschriebenen Positionen des festgelegten Wegs (5) Reibungs-Vorschubeinrichtungen (90) bereitgestellt sind, wobei die Reibungs-Vorschubeinrichtungen (90) die treibende Kraft auf die beweglichen Körper (20) übertragen, indem sie an den lateral ausgerichteten passiven Oberflächen (25) anliegen und eine Drehbewegung auf diese übertragen.

## Revendications

1. Appareil de transport utilisant des corps mobiles (20), comprenant :
un dispositif de rail (11) ; des corps mobiles (20) qui peut se déplacer le long d'un trajet déterminé (5) en étant supportés et guidés par le dispositif de rail (11) ; une unité de support (60) pour un article transporté (W) qui est disposé sur un corps principal (21) de chaque corps mobile (20) ; et des dispositifs guidés (30, 50) supportés et guidés par le dispositif de rail (11), les dispositifs guidés (30) étant raccordés à chaque corps mobile (20) à des positions correspondant aux extrémités avant et arrière de celui-ci, dans lequel chaque dispositif guidé (30) est raccordé de manière à pouvoir tourner de manière relative par l'intermédiaire d'un axe latéral (41) à une partie inférieure d'un arbre vertical (27) s'étendant depuis le corps principal (20),
**caractérisé en ce que**
l'arbre vertical (27) est raccordé avec un corps de support de rouleau latéral (68), et des roues folles (66) sont disposées au niveau des extrémité droite et gauche du corps de support de rouleau (68), et les roues folles (66) sont supportées et guidées par des corps de guidage (6, 7) disposés à des positions prescrites sur le trajet déterminé (5) et le corps principal (21) de chaque corps mobile (20) comprend trois ou plus corps de cadre (22, 23, 24) raccordés de manière à pouvoir tourner de manière relative par l'intermédiaire d'arbres verticaux (27), le corps principal (21) est raccordé avec des dispositifs guidés (30) à des positions correspondant aux extrémités avant et arrière de chaque corps de cadre (22, 23, 24).

2. Appareil de transport utilisant des corps mobiles selon la revendication 1, **caractérisé en ce que** des corps de guidage (7) sont disposés sur une section de trajet incurvée (5b) du trajet déterminé (5).

3. Appareil de transport utilisant des corps mobiles selon la revendication 1, **caractérisé en ce que** les dispositifs guidés (30) ont un corps principal de chariot (31) raccordé au corps principal (21), et des rouleaux supportés (33) supportés et guidés par le dispositif de rail (12) et des rouleaux guidés (35) guidés par le dispositif de rail (12) sont disposés respectivement de manière répartie à l'avant et à l'arrière du corps principal de chariot (31).

4. Appareil de transport utilisant des corps mobiles selon la revendication 1, **caractérisé en ce que** l'unité de support (60) est disposée entre les parties supérieures des arbres verticaux (27).

5. Appareil de transport utilisant des corps mobiles selon la revendication 1, **caractérisé en ce qu'**un corps passif (36) est disposé sur chaque corps mobile (20) et qu'un dispositif d'avancement de type rotatif sans fin (70) est disposé à un autre emplacement prescrit du trajet déterminé (5), le dispositif d'avancement (70) transmettant une force motrice au corps mobile (20) au moyen d'un corps de transmission qui est en prise avec, et agit sur, le corps passif (36).

6. Appareil de transport utilisant des corps mobiles selon la revendication 1, **caractérisé en ce qu'**une surface passive orientée latéralement (25) est formée sur chaque corps mobile (20) et que des dispositifs d'avancement de type par frottement (90) sont disposés à des positions prescrites du trajet déterminé (5), les dispositifs d'avancement de type par frottement (90) transmettant une force motrice au corps mobile (20) en venant en butée contre, et en transmettant une action rotative à, la surface passive orientée latéralement (25).
